## Europäisches Patentamt

(19) **European Patent Office**

**Office européen des brevets**

(11) Numéro de publication: **0 114 138**
**B1**

---

(12) ## FASCICULE DE BREVET EUROPEEN

(45) Date de publication du fascicule du brevet:
**12.03.86**

(51) Int. Cl.⁴: **B 01 J 8/04,** C 01 C 1/04,
C 07 C 29/15

(21) Numéro de dépôt: **84400070.3**

(22) Date de dépôt: **13.01.84**

---

(54) Procédé de régulation des températures de fonctionnement d'un réacteur de synthèse et équipement interne de mise en oeuvre.

(30) Priorité: **17.01.83 FR 8300630**

(43) Date de publication de la demande:
**25.07.84 Bulletin 84/30**

(45) Mention de la délivrance du brevet:
**12.03.86 Bulletin 86/11**

(84) Etats contractants désignés:
**AT BE CH DE FR GB IT LI LU NL SE**

(56) Documents cités:
**DE - C - 940 977**
**FR - A - 2 143 329**
**FR - A - 2 277 035**

(73) Titulaire: **SOCIETE CHIMIQUE DE LA GRANDE PAROISSE, AZOTE ET PRODUITS CHIMIQUES, 8, rue Cognacq-Jay, F-75007 Paris (FR)**

(72) Inventeur: **Papillon, André, 32 avenue Henri Martin, F-94400 Saint-Maur-des-Fossés (FR)**
Inventeur: **Lesur, Pierre, 20 avenue Rapp, F-75007 Paris (FR)**
Inventeur: **Lafleur, Guy, 2 rue du Bordeau Saint-Rémy-L'Honoré, F-78690 Les Essarts-le-Roi (FR)**
Inventeur: **Faury, Christian, 16 avenue Victor Hugo, F-92170 Vanves (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

---

ACTORUM AG

## Description

La présente invention concerne un procédé de régulation des températures de fonctionnement d'un réacteur de synthèse et l'équipement interne de mise en œuvre.

Il est bien connu que, dans les réacteurs de synthèse où sont industriellement effectuées des réactions catalytiques exothermiques d'équilibre en phase gazeuse, par exemple dans la synthèse de l'ammoniac ou dans celle du méthanol, il est nécessaire de faire un contrôle précis des conditions de réaction, ce qui signifie que, pour une pression donnée, il convient de disposer des moyens de régulation des températures. En effet, d'une part, en théorie, il est souhaitable de maintenir la température à la fois à une valeur suffisamment basse pour favoriser l'équilibre et à une valeur suffisamment élevée pour favoriser la vitesse de réaction en présence d'un catalyseur de caractéristiques données. D'autre part, notamment dans la conduite de la synthèse du méthanol, il est impératif d'éviter la surchauffe du catalyseur et la naissance éventuelle de réactions parasites. Le moyen dont on peut s'approcher de ce régime idéal dépend étroitement de la structure interne du réacteur de synthèse et de la méthode utilisée pour le réglage de la température.

Avec l'apparition des unités de grande capacité de production comportant un réacteur unique, fonctionnant à une pression modérée — comprise entre 5 et 35 MPa pour la synthèse d'ammoniac et entre 5 et 15 MPa pour la synthèse de méthanol —, la méthode classique, consistant à refroidir la masse elle-même du catalyseur soit en disposant directement celui-ci à l'intérieur de plusieurs tubes d'échange de chaleur, soit au contraire en le plaçant à l'extérieur desdits tubes, a été remplacée, en raison de difficultés technologiques de réalisation, par une nouvelle méthode consistant à diviser le catalyseur en plusieurs lits, de façon que le gaz réagisse adiabatiquement à l'intérieur de chaque lit individuel et que l'on procède à son refroidissement à la sortie du lit considéré et avant son entrée dans le lit suivant. Et l'on connaît deux méthodes de refroidissement intermédiaire.

Selon la première méthode, on assure ce refroidissement par simple mélange du gaz provenant de la réaction dans un lit catalytique donné et sortant de celui-ci à une température relativement élevée, 450 à 525°C dans le cas de la synthèse de l'ammoniac, avec du gaz frais n'ayant pas encore réagi, à une température nettement inférieure à celle de la réaction, par exemple 100 à 250°C, toujours pour la synthèse de l'ammoniac. Ainsi, une certaine proportion du gaz frais doit être introduite comme moyen de refroidissement entre les lits successifs de catalyseur, ce qui signifie qu'une partie seulement du gaz de boucle est introduite dans le premier lit, et que la proportion du gaz de boucle passant dans chacun des lits successifs augmente progressivement au fur et à mesure de l'addition du gaz de refroidissement. Suivant ce principe, la totalité du gaz de boucle à traiter n'est au contact du catalyseur que dans le dernier lit catalytique. A la sortie de ce dernier lit, le gaz total ayant réagi — à une température de 425 à 475°C pour la synthèse de l'ammoniac — passe alors dans un échangeur de chaleur, qui permet de porter la fraction du gaz entrant dans le premier lit à la température convenable pour l'amorçage de la réaction, à 350-425°C pour l'ammoniac. Cet échangeur dénommé échangeur final est le plus souvent placé dans le même tube de force que les lits de catalyseur à la partie inférieure de ce tube, ou bien disposé dans un tube de force séparé.

Suivant la seconde méthode, on effectue le refroidissement intermédiaire au moyen d'un échangeur de chaleur indirect, le fluide refroidissant étant un fluide extérieur ou le gaz frais de synthèse lui-même n'ayant pas encore réagi. Dans ce cas, la totalité du gaz de boucle peut ainsi passer successivement à travers tous les lits de catalyseur, cela ayant pour effet principal, toutes autres conditions étant égales par ailleurs, pour une quantité donnée de catalyseur, d'accroître le rendement de la réaction de synthèse. Sachant que la synthèse s'effectue dans les conditions les plus favorables au début du premier lit catalytique, on comprendra tout l'intérêt du passage de la totalité du gaz à traiter au travers de ce premier lit. On connaît une mise en œuvre de cette méthode avec positionnement d'un échangeur entre chaque couche catalytique.

Dans le cadre de l'application du principe de cette seconde méthode de régulation des températures de fonctionnement d'un réacteur de synthèse à lits de catalyseur superposés dans lequel sont effectués des réactions catalytiques exothermiques d'équilibre en phase gazeuse, on a recherché des conditions de circulation des gaz d'échange de chaleur et de réglage des températures permettant l'utilisation de grands diamètres pour les lits de catalyseur, tout en limitant la perte de charge des gaz traversant ceux-ci, même lorsque la granulométrie du catalyseur est faible de façon à améliorer le rendement de la réaction de synthèse.

On a trouvé que, même dans des unités modernes de très grandes capacités, pouvant atteindre plusieurs milliers de tonnes par jour, il est possible d'obtenir un excellent rendement de la réaction de synthèse, avec des pertes de charge minimales des gaz traversant les différents lits catalytiques, tout en assurant leur écoulement d'une manière uniforme à travers toute la section traversée, et cela d'une manière particulièrement simple, en faisant circuler axialement les gaz réagissants, sans être contraint de recourir à des circulations radiales ou axialo-radiales, mettant en œuvre des dispositifs de circulation des gaz, d'échange de chaleur et d'étanchéité des différents circuits entre eux plus compliqués, toujours délicats de réalisation et difficiles à mettre en place.

Le gaz frais de boucle n'ayant pas encore réagi est réchauffé à la température convenable d'amorçage pour son entrée dans le premier lit de catalyseur par échange indirect, d'abord avec le gaz sortant du dernier lit de catalyseur, et ensuite, successivement, avec le gaz sortant de l'avant-dernier lit de catalyseur, dans le but également de refroidir ce dernier gaz à la température convenable à son entrée dans le dernier lit de catalyseur, puis avec le gaz sortant de l'antépénultième lit de catalyseur, dans le but également de refroidir ce dernier gaz à la température convenable à son entrée dans l'avant-dernier lit de catalyseur, jusqu'à ainsi avec le gaz sortant du premier lit de catalyseur, dans le but également de refroidir ce dernier gaz à la température convenable à son entrée dans le deuxième lit de catalyseur.

Dans une variante simplifée avec deux lits de catalyseur, le gaz frais de boucle, n'étant pas encore à la température convenable d'amorçage pour son entrée dans le premier lit catalytique, utilise d'abord la chaleur du gaz sortant du deuxième et dernier lit catalytique, et ensuite celle seulement du gaz sortant du premier lit de catalyseur, afin de refroidir ce dernier gaz à la température convenable à son entrée dans le deuxième lit du catalyseur.

L'échange indirect de chaleur à contre-courant s'effectue dans une zone d'échange thermique à circulation axiale unique, interne, au centre de la zone catalytique, de hauteur égale à celle de la zone catalytique. Le gaz frais de boucle, subdivisé en un grand nombre de courants, circule dans le sens ascendant sur toute la longueur de la zone d'échange thermique, elle-même subdivisée en un nombre de sections d'échange thermique égal au nombre de lits catalytiques. La longueur de chaque section d'échange thermique est proportionnelle au degré de réaction dans chaque lit catalytique, c'est-à-dire à la quantité de chaleur à enlever. En conséquence, les longueurs des sections d'échange thermique vont en décroissant de la section supérieure à la section inférieure de la zone d'échange thermique.

Selon l'invention, la régulation des températures de fonctionnement d'un réacteur de synthèse peut être complétée par l'introduction directe d'une fraction du gaz frais de boucle dans le premier lit catalytique. Ce réglage par introduction de gaz non réchauffé a pour effet de limiter partiellement l'action de l'échange thermique interne en diminuant le débit de gaz frais réchauffé et donc de modérer et de contrôler la température d'entrée au premier lit catalytique.

On peut mettre en œuvre deux autres moyens de réglage complémentaires de la température de fonctionnement du réacteur, en agissant sur la température d'entrée sur le deuxième lit de catalyseur. Ces moyens complémentaires sont utilisés en fonction de la composition du gaz de réaction, du degré de réaction souhaité dans le lit catalytique et de l'âge du catalyseur.

L'introduction directe d'une fraction du gaz frais de boucle n'ayant pas encore réagi dans le gaz entrant dans le deuxième lit catalytique modère la température d'entrée dans celui-ci; cette fraction du gaz frais ne passe alors ni dans l'échangeur interne ni dans le premier lit catalytique.

On peut aussi procéder à une introduction directe d'une fraction du gaz sortant du premier lit catalytique directement à l'entrée du deuxième lit catalytique. Ce dernier réglage a pour résultat que cette fraction du gaz ne passe plus dans l'échangeur thermique interne de la section supérieure d'échange et donc que la température d'entrée au deuxième lit catalytique s'élève.

Dans le cas d'un plus grand nombre de lits catalytiques, on met en œuvre des moyens supplémentaires de réglage de la température à l'entrée des lits catalytiques suivants soit pour la modérer, soit pour l'augmenter selon les mêmes moyens que décrits précédemment.

Le réacteur de synthèse adapté à la régulation des températures de fonctionnement selon l'invention est d'un type vertical ou sphérique.

Ce réacteur est généralement constitué, d'une manière classique, par un tube ou corps de force comportant une virole cylindrique verticale, munie à chaque extrémité d'une calotte hémisphérique, comportant des tubulures d'entrée et de sortie des gaz. Dans un réacteur de type sphérique, les deux hémisphères sont réunis sans virole cylindrique intermédiaire.

A l'intérieur du réacteur est placé un équipement interne démontable, aucune soudure n'étant effectuée à l'intérieur du corps de force au moment du montage.

L'équipement interne du réacteur est constitué d'une enveloppe étanche généralement calorifugée contenant au moins deux lits catalytiques superposés, supportés par des grilles, la sortie d'un lit étant séparée de l'entrée du lit suivant par une cloison étanche de séparation, l'ensemble constituant la cartouche catalytique, et ladite enveloppe comportant à sa partie supérieure une chambre de répartition uniforme des gaz entrant dans le premier lit de catalyseur. Les grilles suportant le catalyseur peuvent être inclinées en montant du centre vers l'extérieur du réacteur.

L'équipement interne du réacteur est caractérisé par un échangeur de chaleur interne, central, démontable, placé symétriquement par rapport à la cartouche catalytique. Cet échangeur unique disposé verticalement dans l'axe du réacteur comporte les différents conduits ou passages permettant la circulation désirée des gaz entre les différentes sections de l'équipement interne.

L'échangeur central est constitué par un grand nombre de tubes verticaux disposés dans une virole concentrique à l'axe du réacteur, à l'intérieur desquels circule de bas en haut le gaz frais de boucle avant réaction en vue de son réchauffement à la température convenable d'amorçage de la réaction de synthèse pour son entrée dans le premier lit de catalyseur.

Le dimensionnement de l'échangeur est tel que, compte tenu de l'échange thermique désiré suivant le type de synthèse, sa hauteur soit égale à la somme des hauteurs des lits de catalyseurs, y compris les hauteurs des espaces intermédiaires entre les lits, c'est-à-dire à la cartouche catalytique.

La paroi externe de la virole de l'échangeur est en contact avec la cartouche catalytique, et un espace concentrique est ménagé entre cette paroi externe de la virole et le périmètre externe des tubes échangeurs, sur toute la hauteur de l'échangeur, en vue de la circulation des gaz provenant des différents lits catalytiques.

L'échangeur de chaleur comporte un nombre de plaques tubulaires supérieur d'une unité au nombre de lits de catalyseurs. Pour un réacteur comportant seulement deux lits catalytiques, l'échangeur comporte alors trois plaques tubulaires; c'est-à-dire deux plaques aux extrémités supérieure et inférieure de l'échangeur et une plaque intercalaire.

Le positionnement de la ou des plaques intermédiaires est en relation fonctionnelle avec l'échange thermique désiré entre les différents circuits de gaz, les longueurs relatives entre les plaques tubulaires étant proportionnelles au degré de réaction dans chaque lit. Sachant que la quantité de chaleur à enlever de chacun des lits catalytiques individuels diminue en fonction du taux de transformation dans chaque lit, c'est-à-dire du premier au dernier lit catalytique, les tailles relatives des différentes zones de l'échangeur vont en diminuant du haut en bas de l'échangeur, la plus grande longueur étant comprise entre la plaque tubulaire supérieure de l'échangeur et la première plaque intermédiaire.

Entre la plaque tubulaire inférieure et la plaque tubulaire intermédiaire, le gaz frais avant réaction circulant dans les tubes verticaux de l'échangeur est réchauffé à contre-courant par les gaz sortant du dernier lit catalytique. Entre la plaque tubulaire intermédiaire et la plaque tubulaire supérieure de l'échangeur le gaz frais avant réaction circulant dans les tubes verticaux de l'échangeur est réchauffé à contre-courant par le gaz ayant réagi sortant du précédent lit catalytique, c'est-à-dire du premier lit dans le cas d'un réacteur à deux lits.

Les nombreux tubes de l'échangeur thermique sont fixés par exemple par soudage sur les plaques tubulaires extrêmes, et fixés par exemple par dudgeonnage sur la ou les plaques intermédiaires; les soudures des tubes sur les plaques extrêmes sont facilement accessibles à partir des tubulures supérieure et inférieure du réacteur.

Les parois externe et interne délimitant l'espace concentrique externe de l'échangeur thermique comportent des orifices de circulation des gaz aux niveaux supérieur et inférieur de chacune des sections délimitées par les plaques tubulaires et au niveau de la sortie d'un lit catalytique et de l'entrée du lit suivant.

Dans un réacteur à deux lits superposés, le gaz sortant du dernier lit catalytique traverse l'orifice de la paroi externe de l'espace concentrique au niveau de la sortie de ce lit, juste au-dessus de la plaque tubulaire inférieure pour monter dans l'espace concentrique, de façon à pénétrer, par l'orifice situé au-dessous de la face inférieure de la plaque tubulaire intermédiaire, dans la paroi interne de l'espace concentrique, pour circuler de haut en bas, dans un chicanage approprié autour des tubes verticaux, dans lesquels le gaz frais est réchauffé à contre-courant, et ensuite sortir à la partie inférieure du réacteur.

Ensuite, le gaz sortant du premier lit catalytique emprunte l'orifice situé dans la paroi externe délimitant l'espace concentrique au niveau de l'espace intercalaire entre la grille supportant le catalyseur et la plaque de séparation, pour remonter dans l'espace concentrique de l'échangeur, de façon à pénétrer par l'orifice supérieur situé sur la paroi interne délimitant l'espace concentrique au-dessous de la face interne de la plaque tubulaire supérieure, pour circuler de haut en bas dans un chicanage autour des tubes et sortir à la partie inférieure de la première section de l'échangeur, par l'orifice inférieur situé juste au-dessus de la face supérieure de la plaque tubulaire intermédiaire, pour circuler de bas en haut dans l'espace concentrique de l'échangeur et, après passage par l'orifice situé dans la face externe de la paroi délimitant l'espace concentrique au niveau de l'entrée du deuxième lit catalytique, pénétrer dans celui-ci et le traverser de haut en bas.

Si le réacteur comporte plus de deux lits catalytiques, par exemple trois ou quatre lits, le principe de circulation du gaz entre la sortie d'un lit et l'entrée dans le suivant reste identique à celui décrit précédemment, avec bien entendu la mise en place du nombre de plaques intermédiaires nécessaire, deux ou trois, et l'adaptation des orifices et des espaces concentriques nécessaires de circulation des gaz.

L'équipement interne est muni d'un dispositif complémentaire de réglage donnant la possibilité de modérer éventuellement la température d'entrée du gaz sur le deuxième lit catalytique. Selon cette disposition, la section supérieure de l'échangeur thermique, délimitée par la plaque tubulaire supérieure et la première plaque intermédiaire, est équipée sur toute sa longueur d'un tube central en relation avec le sommet du réacteur par une tuyauterie aboutissant à sa partie supérieure.

Le tube central de la section supérieure de l'échangeur thermique comporte, à sa partie supérieure au niveau de l'orifice supérieur de circulation des gaz provenant du lit catalytique supérieur, en dessous de la plaque tubulaire supérieure, un orifice dont l'ouverture est réglable à distance et par lequel on introduit une certaine fraction du gaz sortant du premier lit directement à l'entrée du deuxième lit catalytique. Cet autre moyen de réglage complémentaire est mis en œuvre quand il est souhaitable d'élever la température d'entrée des gaz dans le deuxième lit catalytique.

Le réacteur est équipé d'un troisième moyen complémentaire de contrôle des températures de fonctionnement, représenté par une tuyauterie pénétrant directement dans la partie supérieure de l'enveloppe étanche dans la boîte de répartition du gaz entrant dans le premier lit catalytique. Ce dispositif est mis en fonctionnement quand il est souhaitable de modérer la température d'entrée au premier lit.

Dans le cas d'un réacteur contenant trois ou quatre lits catalytiques superposés, des moyens et dispositifs complémentaires de réglage de la température à l'entrée des troisième et quatrième lits soit pour la modérer, soit pour l'élever, sont prévus selon les mêmes principes que ceux choisis pour le réglage de la température d'entrée au deuxième lit.

De plus, un espace de circulation du gaz frais n'ayant pas réagi est ménagé entre le corps de force et l'enveloppe étanche de l'équipement in-

terne, dans lequel le gaz frais circulant de haut en bas est légèrement préchauffé avant son entrée dans les nombreux tubes verticaux de l'échangeur thermique.

L'ensemble de l'échangeur, construit préalablement, est introduit dans le réacteur au moment du montage par l'intermédiaire de la tubulure supérieure, puis le reste de l'équipement interne, constitué d'éléments préfabriqués, est alors monté autour de l'échangeur interne, ainsi que le catalyseur mis en place au fur et à mesure. L'échangeur dans son intégralité est par la suite démontable, après vidange préalable du catalyseur. Le diamètre de la tubulure supérieure du réacteur est choisi juste nécessaire pour procéder au montage, et éventuellement, au démontage de l'ensemble de l'échangeur; le diamètre de la tubulure inférieure peut être plus petit.

Cette manière de procéder est intéressante car elle permet de limiter le diamètre de la tubulure supérieure du réacteur à ce qui est strictement indispensable au passage de l'ensemble de l'échangeur thermique. Elle autorise donc l'utilisation de grands diamètres pour les lits de catalyseur, sans que l'on soit obligé de prévoir à la partie supérieure, et éventuellement à la partie inférieure, du corps de force une ouverture d'un diamètre aussi grand que celui de l'équipement interne contenant le catalyseur.

De ce fait, les grands diamètres ne sont limités que par les possibilités technologiques de construction des corps de force. Actuellement, on peut réaliser, pour des pressions internes de l'ordre de 5 à 25 MPa, des diamètres intérieurs de l'ordre de 8 m, tout en ayant la possibilité d'envisager l'utilisation de diamètres intérieurs encore plus grands.

Le nouveau type de réacteur, malgré les importantes quantités de catalyseur mises en œuvre dans les unités modernes de très grande capacité de production, de l'ordre de plusieurs milliers de tonnes par jour, rend possible la limitation des pertes de charge des gaz traversant les lits de catalyseurs, même lorsque la granulométrie est faible, tout en assurant leur écoulement d'une manière uniforme à travers la section traversée, et cela d'une manière particulièrement simple.

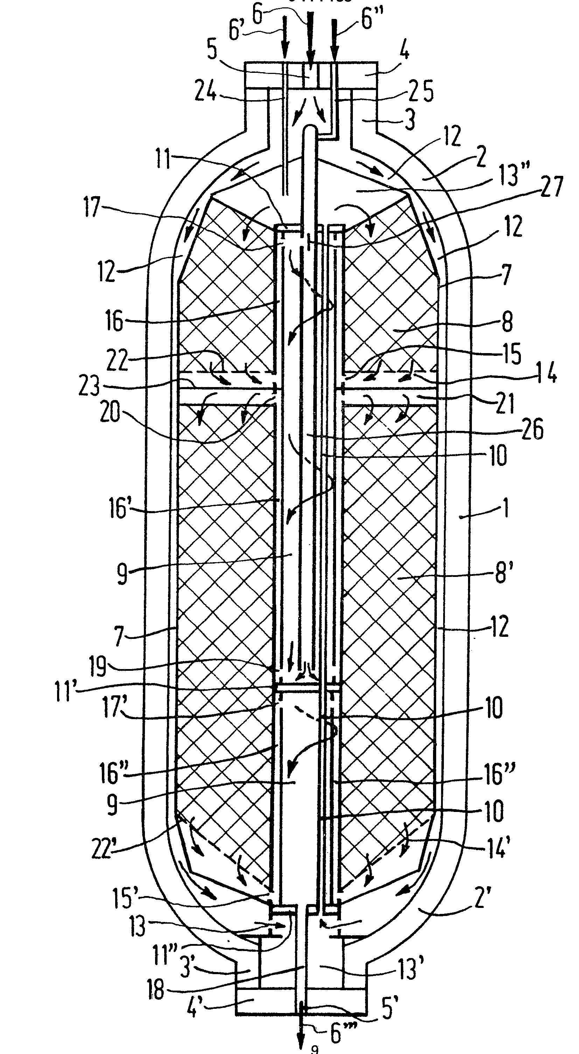

A titre non limitatif, un mode de réalisation et de mise en œuvre de l'invention est figuré schématiquement sur la figure unique du dessin annexé, qui représente la coupe d'un réacteur de synthèse, comportant deux lits de catalyseur, et muni de son équipement interne de circulation des gaz, d'échange de chaleur entre eux, et de réglage des températures. Les températures indiquées ci-après correspondent au cas particulier d'une unité de production d'ammoniac.

Sur la figure, ce réacteur de synthèse est constitué par un tube de force, comportant une virole cylindrique 1, munie à chaque extrémité d'une calotte hémisphérique 2 et 2', comportant chacune une tubulure 3 et 3', fermée par un couvercle 4 et 4', au travers duquel est pratiqué un orifice 5 et 5'.

Par l'orifice supérieur 5, on introduit le gaz frais de boucle n'ayant pas encore réagi 6. Par l'orifice inférieur 5', on sort le gaz ayant réagi 6'' dans l'appareillage situé à l'intérieur du réacteur, et décrit ci-après.

A l'intérieur du réacteur, l'équipement interne démontable est constitué d'une enveloppe étanche 7, en général calorifugée, contenant le catalyseur déposé en deux lits horizontaux 8 et 8', et l'échangeur de chaleur 9 placé verticalement dans l'axe du réacteur.

L'échangeur central 9 est constitué d'un grand nombre de tubes verticaux 10 dont la longueur est celle de l'échangeur, disposés dans une virole concentrique à l'axe du réacteur, à l'intérieur desquels circule, de bas en haut, le gas frais de boucle n'ayant pas encore réagi 6 de façon qu'il soit réchauffé à la température convenable d'amorçage pour son entrée dans le premier lit catalytique 8.

Dans ce réacteur à deux lits catalytiques, l'échangeur de chaleur comporte les trois plaques tubulaires respectivement numérotées 11, 11' et 11''. Les nombreux tubes 10 de l'échangeur sont fixés, par exemple par soudage, sur les plaques tubulaires extrêmes 11 et 11'' et, par exemple, par dudgeonnage sur la plaque tubulaire intermédiaire 11'. Les fixations des tubes sur les plaques extrêmes sont facilement accessibles, à partir respectivement des tubulures 3 et 3'. Le diamètre de la tubulure 3 est dimensionné juste nécessaire pour procéder au montage, et éventuellement, au démontage de l'ensemble de l'échangeur. Les impératifs n'étant pas les mêmes pour la tubulure inférieure 3', le diamètre peut être plus petit.

Le gaz frais de boucle est introduit par l'orifice 5 à une température relativement modérée, dépendant du système adopté pour la récupération de la chaleur de réaction à l'extérieur du réacteur lui-même (par exemple 100 à 250° C), circule dans l'espace 12 compris entre le corps de force 2, 1, 2' et l'enveloppe étanche 7 de l'équipement interne de haut en bas par exemple, de façon à maintenir ce corps de force à cette température modérée de 100 à 250° C, alors que le régime des températures à l'intérieur de l'enveloppe 7 est nettement plus élevé (350 à 525° C). L'espace 12 est muni d'un dispositif de bonne circulation du gaz non représenté sur la figure.

A la partie inférieure du réacteur, le gaz frais, légèrement réchauffé de quelques degrés par rapport à sa température d'entrée à travers les passages 13, s'introduit dans la boîte 13' d'où il pénètre à l'intérieur de l'ensemble des tubes 10 de l'échangeur 9, pour être réchauffé, d'abord en parcourant la longueur comprise entre la plaque tubulaire 11'' et la plaque tubulaire 11', puis en parcourant celle comprise entre la plaque tubulaire 11' et la plaque tubulaire 11 jusqu'à une température finale de l'ordre de 350 à 425° C, convenable pour l'amorçage de la réaction de synthèse de l'ammoniac. Le gaz entrant est alors réparti uniformément dans la boîte de répartition 13'' d'où il pénètre dans le premier lit de catalyseur 8.

Entre la plaque tubulaire inférieure 11'' et la plaque intermédiaire 11', le gaz frais n'ayant pas réagi circulant dans les tubes 10 de l'échangeur thermique est réchauffé à contre-courant par le gaz 14' sortant du second lit de catalyseur 8' qui est passé par l'orifice 15' pour monter dans l'espace concentrique 16" aux tubes de l'échangeur de chaleur, de façon à pénétrer ensuite par l'orifice 17' pour circuler de haut en bas, dans un chicanage approprié non représenté, autour des tubes 10 et sortir à la partie inférieure de l'échangeur de chaleur 9 par la tuyauterie 18 et l'orifice 5'.

De même, entre la plaque tubulaire intermédaire 11' et la plaque tubulaire supérieure 11 le gaz frais est réchauffé à contre-courant par le gaz 14 sortant du premier lit catalytique 8 qui est passé par l'orifice 15, pour monter dans l'espace concentrique 16 de façon à pénétrer ensuite par l'orifice 17 pour circuler de haut en bas, dans un chicanage approprié, autour des tubes 10 et sortir finalement à la partie inférieure du second segment de l'échangeur de chaleur juste au-dessus de la plaque tubulaire intermédiaire 11' par l'orifice 19 avant de remonter de bas en haut dans l'espace concentrique 16' et passer par l'orifice 20 avant d'entrer en 21 dans le second lit de catalyseur.

Les lits de catalyseur sont supportés par les grilles 22 et 22'. Et la sortie du premier lit est séparée de l'entrée du deuxième par la cloison de séparation étanche 23.

Le gaz ayant réagi sort du premier lit catalytique en 14 à une température comprise enter 475 et 525° C, pour être ensuite refroidi à l'entrée du deuxième lit 21 jusqu'à une température comprise entre 350 et 425° C, pour l'élever à nouveau dans le deuxième lit catalytique jusqu'à 425 à 475° C en sortie 14'.

Le réacteur est muni d'un ensemble de moyens permettant de contrôler le régime des températures de fonctionnement à l'entrée de chacun des lits de catalyseur.

La tuyauterie 24, au sommet du réacteur, permet l'introduction directe d'une certaine fraction de gaz frais de boucle 6' dans la boîte 13", puis dans le premier lit catalytique 8.

Par l'intermédiaire de la tuyauterie 25, également au sommet du réacteur, et du passage central 26 de l'échangeur thermique 9, on peut introduire directement une certaine fraction du gaz frais de boucle 6" qui, après passage par l'orifice 19, se mélange au gaz provenant de la réaction dans le premier lit catalytique 8 ayant circulé dans la partie supérieure de l'échangeur entre les plaques tubulaires 11 et 11', et remonte en mélange avec ce dit gaz, dans l'espace concentrique 16' et, après passage par l'orifice 20, pénètre en 21 dans le second lit catalytique.

Par l'intermédiaire de l'orifice 27, dont l'ouverture est réglable à distance, ménagé dans le passage central 26 de l'échangeur 9, juste en dessous de la plaque tubulaire supérieure 11, au niveau de l'orifice 17, on peut introduire directement une fraction du gaz sortant 14 du premier lit catalytique 8 qui emprunte l'orifice 15, remonte dans l'espace concentrique 16, en sort par l'orifice 17, s'introduit dans le tube central de l'échangeur 26 par l'orifice 27 qui est ouvert, circule de haut en bas dans ledit tube central, puis passe par l'orifice 19 ménagé à la base de la partie supérieure de l'échangeur thermique, circule de bas en haut dans l'espace concentrique 16' et, après passage par l'orifice 20, s'introduit en 21 dans le second lit catalytique.

L'ensemble de l'appareillage ainsi que les moyens d'entrée et de sortie des gaz dans les différents circuits sont munis des systèmes d'étanchéité et des dispositifs de dilatation des matériaux adaptés, en fonction des variations des températures, tant au démarrage qu'en cours de marche et au moment de l'arrêt.

**Revendications**

1. Procédé de régulation des températures de fonctionnement d'un réacteur de synthèse exothermique catalytique, sous pression, en phase gazeuse, dont la zone catalytique contient au moins deux lits catalytiques superposés, et à circulation interne, verticale et axiale des gaz, selon lequel le gaz frais de boucle avant réaction est réchauffé par échange indirect avec le gaz sortant du dernier lit de catalyseur, et ensuite successivement, avec le gaz sortant de l'avant-dernier lit de catalyseur, puis avec le gaz sortant de l'antépénultième lit de catalyseur, jusqu'à ainsi avec le gaz sortant du premier lit de catalyseur, l'échange indirect de chaleur à contre-courant s'effectuant dans une zone d'échange thermique à circulation axiale, interne, au centre de la zone catalytique, le gaz frais de boucle subdivisé en un grand nombre de courants circulant dans le sens ascendant sur toute la longueur de la zone thermique, caractérisé en ce que l'on procède à l'introduction directe d'une fraction du gaz sortant du premier lit catalytique à l'entrée du deuxième lit catalytique.

2. Réacteur de synthèse exothermique, catalytique, en phase gazeuse, sous pression en vue de la mise en œuvre du procédé selon la revendication 1, constitué d'un tube de force à l'intérieur duquel est placé un équipement interne constitué d'une enveloppe étanche (7) contenant au moins deux lits catalytiques superposés (8), supportés par des grilles (22) et (22'), la sortie d'un lit étant séparée de l'entrée du lit suivant par une cloison étanche de séparation (23), l'ensemble constituant la cartouche catalytique, et ladite enveloppe comportant à sa partie supérieure une chambre de répartition uniforme (13") du gaz entrant (6') par la tuyauterie (24) dans le premier lit de catalyseur (8), selon lequel l'équipement interne contient un échangeur de chaleur (9) interne, central, démontable, vertical, placé symétriquement par rapport à la cartouche catalytique, ledit échangeur (9) comportant un nombre de plaques tubulaires (11, 11', 11") supérieur d'une unité au nombre de lits catalytiques (8), (8'), caractérisé en ce que la section supérieure de l'échangeur de chaleur délimitée par la plaque tubulaire supérieure (11) et la première plaque intermédiaire (11') est équipée sur pratiquement toute sa longueur d'un tube central fermé au sommet (26), en relation avec le sommet du réacteur par la tuyauterie (25) aboutissant à la partie supérieure de ce dernier (6"), et ouvert à sa partie inférieure, ledit tube central comportant à sa partie supérieure, juste en dessous de la plaque tubulaire supérieure (11), au niveau de l'orifice supérieur (17) de circulation des gaz provenant du lit catalytique supérieur, un orifice dont l'ouverture est réglable à distance (27).

3. Application du procédé de régulation des températures de fonctionnement selon la revendication 1 aux réacteurs de grands diamètres, utilisables en particulier dans les unités de production de grosse capacité d'ammoniac et de méthanol.

**Patentansprüche**

1. Verfahren zur Regelung von Temperaturen für die Funktion eines Reaktors exothermer, katalytischer Synthese unter Druck in Gasphase, dessen katalytische Zone mindestens zwei übereinander angeordnete katalytische Betten und Gas mit innerer, vertikaler und axialer Zirkulation aufweist, bei welchem das frische Gas des geschlossenen Kreislaufes vor der Reaktion durch indirekten Austausch mit demjenigen Gas wieder erwärmt wird, welches aus dem letzten Bett des Katalysators kommt, und dann danach mit demjenigen Gas, welches aus dem vorletzten Bett des Katalysators kommt, dann mit demjenigen Gas, welches aus dem drittletzten Bett des Katalysators kommt, bis somit mit demjenigen Gas, welches aus dem ersten Bett des Katalysators kommt, wobei der indirekte Wärmeaustausch im Gegenstrom in einer thermischen Austauscherzone mit axialer, innerer Zirkulation in der Mitte der katalytischen Zone erfolgt, und wobei das frische Gas des geschlossenen Kreislaufes in eine grosse Zahl von Strömen aufgeteilt wird, die im aufsteigenden Sinne auf der ganzen Länge der thermischen Zone zirkulieren, dadurch gekennzeichnet, dass man am Eintritt des zweiten katalytischen Bettes mit der direkten Einführung einer Fraktion desjenigen Gases verfährt, welches aus dem ersten katalytischen Bett kommt.

2. Reaktor exothermer, katalytischer Synthese in Gasphase unter Druck zur Durchführung des Verfahrens nach Anspruch 1, der aus einem druckfesten Rohr besteht, in dessen Innerem eine innere Ausstattung angeordnet ist, die aus einem dichten Mantel (7) besteht, der mindestens zwei übereinander angeordnete katalytische Betten (8) aufweist, welche durch Gitter (22) und (22') unterstützt sind, wobei der Ausgang des einen Bettes vom Eingang des folgenden Bettes durch eine dichte Trennwand (23) separiert ist, wobei das Ganze die katalytische Kartusche darstellt, und der Mantel an seinem oberen Teil eine Kammer für gleichmässiges Verteilen (13") desjenigen Gases aufweist, welches durch das Leitungssystem (24) in das erste Bett des Katalysators (8) eintritt (6'), gemäss welchem die innere Ausstattung einen inneren, mittigen, zerlegbaren, vertikalen Wärmetauscher (9) aufweist, der symmetrisch bezüglich der katalytischen Kartusche angeordnet ist, und wobei der Austauscher (9) eine Anzahl von rohrförmigen Platten (11, 11', 11") enthält, die um 1 grösser ist als die Anzahl der katalytischen Betten (8), (8'), dadurch gekennzeichnet, dass der obere Abschnitt des Wärmetauschers durch die obere rohrförmige Platte (11) und die erste Zwischenplatte (11') begrenzt ist, auf praktisch seiner ganzen Länge mit einem an der Spitze geschlossenen zentralen Rohr (26) ausgestattet ist und mit der Spitze des Reaktors durch das Leitungssystem (25) in Verbindung steht, welches am oberen Teil des letzteren (6") mündet und an seinem unteren Teil offen ist, wobei das zentrale Rohr an seinem oberen Teil unmittelbar unter der oberen rohrförmigen Platte (11) auf der Höhe der oberen Öffnung (17) für die Zirkulation von Gas, das aus dem oberen katalytischen Bett kommt, eine Öffnung aufweist, die ferngesteuert ist (27).

3. Anwendung des Verfahrens zur Regelung von Funktionstemperaturen nach Anspruch 1 auf Reaktoren grosser Durchmesser, die insbesondere in den Produktionseinheiten grosser Kapazität für Ammoniak und Methanol benutzbar sind.

**Claims**

1. Temperature-regulating process for the functioning of a reactor for exothermal, catalytic synthesis under pressure in gas phase, the catalytic zone of which containing at least two superimposed catalytic beds, and gas with an internal, vertical and axial circulation, whereby the fresh gas of the closed circuit is reheated by indirect exchange before the reaction with the gas leaving the last bed of the catalyst, and then successively with the gas leaving the penultimate bed of the catalyst, then with the gas leaving the antepenultimate bed of the catalyst, and thus up with the gas leaving the first bed of the catalyst, the indirect heat exchange being in counter-current in a thermal exchange zone with axial, internal circulation in the center of the catalytic zone, and whereby the fresh gas of the closed circuit being subdivided into a large number of flows circulating in the ascending direction along the entire length of the thermal zone, characterized in that one procedes with the direct introduction of a fraction of the gas leaving the first catalytic bed to the entrance of the second catalytic bed.

2. Reactor for exothermic, catalytic synthesis in gaseous phase under pressure to perform the process according to Claim 1, consisting of a pressure-resisting tube, in the interior of which is located an internal equipment consisting of a sealed envelope (7) containing at least two superimposed catalytic beds (8) supported by grids (22) and (22'), the exit of the one bed being separated from the entrance of the following bed by a sealed or tight partition wall (23), the group constituting the catalytic cartridge, and the said envelope comprising at the upper part thereof a chamber for uniform distribution (13") of gas entering (6') through the pipe fitting (24) into the first bed of the catalyst (8), by which the internal equipment contains an internal, central, demountable, vertical heat exchanger (9) symmetrically placed with respect to the catalytic cartridge, the said exchanger (9) comprising a number of tubular plates (11, 11', 11'') by a unity larger than the number of the catalytic beds (8), (8'), characterized by that the upper section of the heat exchanger confined by the upper tubular plate (11) and the first intermediate plate (11') is equipped with a central tube closed at the tip (26) thereof practically along the entire length, and is in relation with the tip of the reactor through the pipe fittings (25) discharging into the upper part of the latter (6'') open at the lower part, the said central tube comprising an orifice (27) the opening of which can be regulated remotely, located at the upper part thereof, just below the upper tubular plate (11) on the level of the upper orifice (17) of circulation of gases leaving the upper catalytic bed.

3. Application of the temperature-regulating process.for the functioning according to Claim 1, to reactors of large diameters, especially useful in mass production unities of large capacity for ammonium hydroxyde and methanol.

0 114 138